# EUROPÄISCHE PATENTSCHRIFT

(11) **EP 2 618 968 B1**
(45) Veröffentlichungstag und Bekanntmachung des Hinweises auf die Patenterteilung: **01.05.2019**
(21) Anmeldenummer: 11754400.7
(22) Anmeldetag: 07.09.2011
(51) Int. Cl.: F16H 3/44, B23B 45/00

(54) **HANDGEFÜHRTES ELEKTROWERKZEUG MIT EINEM GETRIEBE**
HAND-OPERATED ELECTRIC TOOL HAVING A TRANSMISSION
OUTIL ÉLECTRIQUE À MAIN PRÉSENTANT UNE BOÎTE DE VITESSES

(30) Priorität: 22.09.2010 DE 102010041172
(43) Veröffentlichungstag der Anmeldung: 31.07.2013
(73) Patentinhaber: Robert Bosch GmbH, 70442 Stuttgart (DE)
(72) Erfinder: ROEHM, Heiko, 70176 Stuttgart (DE)
(86) Internationale Anmeldenummer: PCT/EP2011/065464
(87) Internationale Veröffentlichungsnummer: WO 2012/038255

(56) Entgegenhaltungen:
- EP-A1- 1 946 895
- DE-A1-102009 020 177
- US-A- 6 105 450

## Beschreibung

### Stand der Technik

Die vorliegende Erfindung betrifft ein Getriebe für ein handgeführtes Elektrowerkzeug mit einem Getriebegehäuse. Das Getriebe ist über eine betätigbare Schaltvorrichtung mindestens zwischen einem ersten Gang mit hohem Drehmoment und einem zweiten Gang mit niedrigem Drehmoment umschaltbar, sowie zum Beispiel in US 6 105 450 A.

Aus dem Stand der Technik sind derartige handgeführte Elektrowerkzeuge bekannt, bei denen ein zugeordnetes Getriebe zwischen zwei oder mehr Gängen umschaltbar ist. Diese Getriebe weisen zwei oder mehr Getriebestufen auf, wobei eine z. B. einem vorgegebenen schnellen Gang mit geringem Drehmoment zugeordnete Getriebestufe durch Verschieben eines geeigneten Schaltglieds zum Umschalten in oder aus diesem Gang stillgelegt bzw. freigegeben wird. Hierbei wird das Schaltglied über einen Schaltbereich verschoben, der als neutrale Übergangsposition ausgebildet ist.

Nachteilig am Stand der Technik ist, dass die Getriebe derartiger Elektrowerkzeuge unter Last nicht zuverlässig umschaltbar sind, sodass ein Benutzer der Werkzeuge diese nach einem entsprechenden Umschaltvorgang aus- und wieder einschalten muss, um den Umschaltvorgang abzuschließen.

### Offenbarung der Erfindung

Eine Aufgabe der Erfindung ist es daher für ein neues handgeführtes Elektrowerkzeug ein Getriebe bereit zu stellen, das auch unter Last zuverlässig zwischen einem ersten Gang mit hohem Drehmoment und einem zweiten Gang mit niedrigem Drehmoment umschaltbar ist.

Dieses Problem wird gelöst durch ein Getriebe nach Anspruch 1.

Die Erfindung ermöglicht somit die Bereitstellung eines handgeführten Elektrowerkzeugs mit einem Getriebe, mit dem eine vergleichsweise große Gangspreizung realisierbar ist und das auch unter Last zuverlässig zwischen dem ersten und zweiten Gang umschaltbar ist.

Gemäß einer Ausführungsform ist das Getriebe als Planetengetriebe mit mindestens einer ersten, einer zweiten und einer dritten Planetenstufe ausgebildet.

Somit kann ein sicheres und robustes Getriebe bereitgestellt werden.

Die betätigbare Schaltvorrichtung ist bevorzugt dazu ausgebildet, das Planetengetriebe durch sequentielle Deaktivierung von mindestens zwei Planetenstufen vom ersten in den zweiten Gang umzuschalten.

Somit kann das Planetengetriebe auf einfache Art und Weise vom ersten in den zweiten Gang umgeschaltet werden.

Die betätigbare Schaltvorrichtung ist bevorzugt dazu ausgebildet, das Planetengetriebe durch sequentielle Aktivierung von mindestens zwei Planetenstufen vom zweiten in den ersten Gang umzuschalten.

Somit kann das Planetengetriebe auf einfache Art und Weise vom zweiten in den ersten Gang umgeschaltet werden.

Gemäß einer Ausführungsform weist die betätigbare Schaltvorrichtung zur Aktivierung und Deaktivierung der zweiten und dritten Planetenstufe mindestens ein erstes und ein zweites Riegelrad auf. Diese sind vorzugsweise über ein zugeordnetes Federelement in axialer Richtung des Planetengetriebes gegeneinander beaufschlagt.

Die Erfindung ermöglicht somit die Bereitstellung einer sicheren und stabilen Schaltvorrichtung, die vergleichsweise kostengünstig realisierbar ist.

Die betätigbare Schaltvorrichtung weist bevorzugt ein Schaltglied auf, das dazu ausgebildet ist, eine Verschiebung des ersten oder zweiten Riegelrads relativ zum zweiten oder ersten Riegelrad in axialer Richtung des Planetengetriebes gegen eine vom Federelement bereitgestellte Federkraft zu ermöglichen.

Somit kann eine Verschiebung des ersten oder zweiten Riegelrads auf einfache Art und Weise ermöglicht werden.

Das erste Riegelrad ist bevorzugt in axialer Richtung des Planetengetriebes von einer ersten in eine zweite Betriebsposition verschiebbar. Das erste Riegelrad ist vorzugsweise in seiner ersten Betriebsposition, die dem ersten Gang zugeordnet ist, drehfest mit einem der zweiten Planetenstufe zugeordneten Hohlrad sowie mittelbar mit dem Getriebegehäuse verbunden, und ist in seiner zweiten Betriebsposition, die dem Zwischengang und dem zweiten Gang zugeordnet ist, drehfest mit einem der ersten Planetenstufe zugeordneten Planetenträger und dem Hohlrad der zweiten Planetenstufe verbunden.

Somit kann eine sichere und zuverlässige Gangumschaltung zwischen dem ersten und zweiten Gang über den Zwischengang ermöglicht werden.

Das zweite Riegelrad ist bevorzugt in axialer Richtung des Planetengetriebes von einer ersten in eine zweite Betriebsposition verschiebbar. Das zweite Riegelrad ist vorzugsweise in seiner ersten Betriebsposition, die dem ersten Gang und dem Zwischengang zugeordnet ist, drehfest mit einem der dritten Planetenstufe zugeordneten Hohlrad und dem Getriebegehäuse verbunden, und ist in seiner zweiten Betriebsposition, die dem zweiten Gang zugeordnet ist, drehfest mit dem Hohlrad der dritten Planetenstufe verbunden.

Somit kann eine sichere und zuverlässige Gangumschaltung zwischen dem ersten und zweiten Gang über den Zwischengang ermöglicht werden.

Gemäß einer Ausführungsform ist das zweite Riegelrad in seiner zweiten Betriebsposition drehfest mit einer Riegelscheibe verbunden, die drehfest und axial unbeweglich im Getriebegehäuse befestigt ist.

Die Erfindung ermöglicht somit die Bereitstellung einer unkomplizierten und kostengünstigen Riegelscheibe zur drehfesten Fixierung des zweiten Riegelrads im Getriebegehäuse.

Gemäß einer Ausführungsform sind das erste und zweite Riegelrad im ersten und zweiten Gang des Planetengetriebes in einer formschlüssigen Verbindung aneinander befestigt, die durch eine vom Federelement bereitgestellte Federkraft fixiert ist.

Somit kann eine Realisierung des ersten und zweiten Ganges auf einfache Art und Weise erreicht werden.

Das erste und zweite Riegelrad sind im Zwischengang des Planetengetriebes bevorzugt gegen eine vom Federelement bereitgestellte Federkraft in axialer Richtung des Planetengetriebes voneinander beabstandet.

Somit kann der Zwischengang sicher und zuverlässig realisiert werden.

Das erste und zweite Riegelrad sind im ersten Gang des Planetengetriebes bevorzugt drehfest im Getriebegehäuse angeordnet. Das erste und zweite Riegelrad sind im zweiten Gang des Planetengetriebes bevorzugt drehbeweglich im Getriebegehäuse angeordnet.

Somit können der erste und zweite Gang auf einfache Art und Weise realisiert werden.

Gemäß einer Ausführungsform ist das erste Riegelrad im Zwischengang des Planetengetriebes drehbeweglich im Getriebegehäuse angeordnet und das zweite Riegelrad ist im Zwischengang des Planetengetriebes bevorzugt drehfest im Getriebegehäuse angeordnet.

Somit kann der Zwischengang sicher und zuverlässig realisiert werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine schematische Ansicht eines handgeführten Elektrowerkzeugs gemäß einer Ausführungsform,
Fig. 2 eine teilweise geschnitten dargestellte Seitenansicht eines Ausschnitts des Elektrowerkzeugs von Fig. 1 beim Betrieb eines beispielhaften Planetengetriebes in einem langsamen Gang mit hohem Drehmoment,
Fig. 3 die Ansicht von Fig. 2 beim Umschalten des Planetengetriebes vom langsamen Gang mit hohem Drehmoment über einen zugeordneten Zwischengang in einen schnellen Gang mit niedrigem Drehmoment,
Fig. 4 die Ansicht von Fig. 3 beim Betrieb des Planetengetriebes in dem schnellen Gang mit niedrigem Drehmoment, und
Fig. 5 eine Schnittansicht einer Planetenstufe des Planetengetriebes von Fig. 4.

### Beschreibung der Ausführungsbeispiele

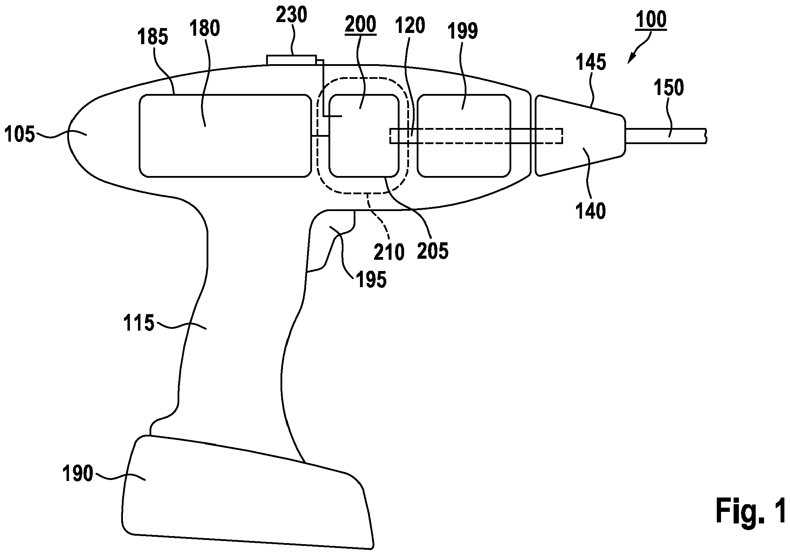

Fig. 1 zeigt ein handgeführtes Elektrowerkzeug 100, das ein Gehäuse 105 mit einem Handgriff 115 aufweist. Gemäß einer Ausführungsform ist das Elektrowerkzeug 100 zur netzunabhängigen Stromversorgung mechanisch und elektrisch mit einem Akkupack 190 verbindbar. In Fig. 1 ist das Elektrowerkzeug 100 beispielhaft als Akku-Bohrschrauber ausgebildet. Es wird jedoch darauf hingewiesen, dass die vorliegende Erfindung nicht auf Akku-Bohrschrauber beschränkt ist, sondern vielmehr bei unterschiedlichen Elektrowerkzeugen Anwendung finden kann, bei denen ein Werkzeug in Drehungen versetzt wird, z. B. bei einem Akku-Schrauber, einer Akku-Schlagbohrmaschine etc., unabhängig davon, ob das Elektrowerkzeug netzunabhängig mit einem Akkupack oder netzabhängig betreibbar ist.

In dem Gehäuse 105 sind ein von dem Akkupack 190 mit Strom versorgter, elektrischer Antriebsmotor 180 und ein Getriebe 200 angeordnet. Der Antriebsmotor 180 ist über das Getriebe 200 mit einer Antriebswelle 120, z. B. einer Antriebsspindel, verbunden. Der Antriebsmotor 180 ist illustrativ in einem Motorgehäuse 185 angeordnet und das Getriebe 200 in einem Getriebegehäuse 205, wobei das Getriebegehäuse 205 und das Motorgehäuse 185 beispielhaft in dem Gehäuse 105 angeordnet sind.

Der Antriebsmotor 180 ist z. B. über einen Handschalter 195 betätigbar, d. h. ein- und ausschaltbar, und kann ein beliebiger Motortyp sein, z. B. ein elektronisch kommutierter Motor oder ein Gleichstrommotor. Vorzugsweise ist der Antriebsmotor 180 derart elektronisch steuer- bzw. regelbar, dass sowohl ein Reversierbetrieb, als auch Vorgaben hinsichtlich einer gewünschten Drehgeschwindigkeit realisierbar sind. Die Funktionsweise und der Aufbau eines geeigneten Antriebsmotors sind aus dem Stand der Technik hinreichend bekannt, sodass hier zwecks Knappheit der Beschreibung auf eine eingehende Beschreibung verzichtet wird.

Das Getriebe 200 ist gemäß einer Ausführungsform mit einem zugeordneten Betätigungselement 230 über mindestens einen Zwischengang zwischen mindestens einem vergleichsweise langsamen ersten Gang mit hohem Drehmoment und einem vergleichsweise schnellen zweiten Gang mit niedrigem Drehmoment umschaltbar. Nachfolgend wird zwecks Knappheit und Einfachheit der Beschreibung lediglich auf den ersten Gang, den zweiten Gang und den Zwischengang Bezug genommen.

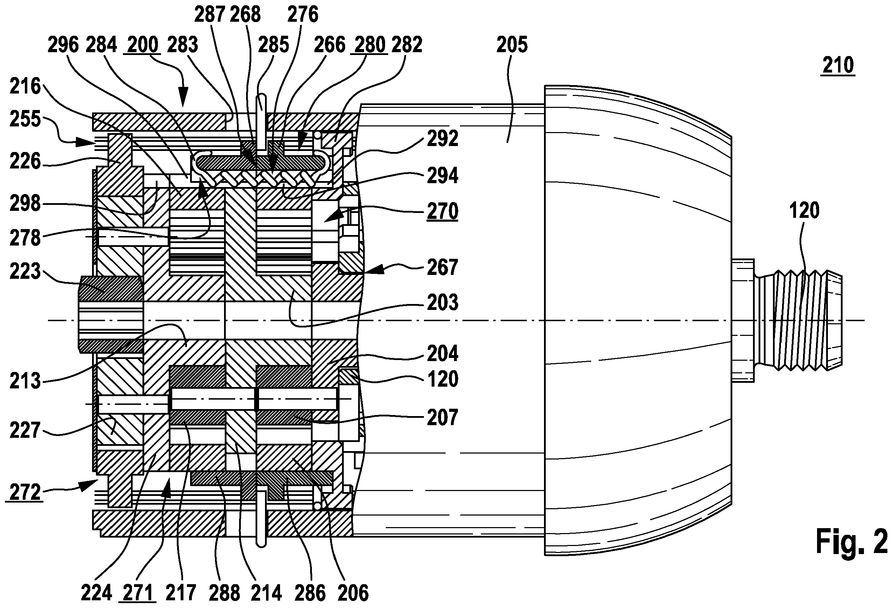

Illustrativ ist dem Getriebe 200 eine optionale Drehmomentkupplung 199 zugeordnet. Im Betrieb des Elektrowerkzeugs 100 wird das Getriebe 200 vom Antriebsmotor 180 drehend angetrieben. Das Getriebe 200 wird unten stehend in Bezug auf eine in Fig. 2 vergrößert dargestellte Schnittansicht eines Ausschnitts 210 des Elektrowerkzeugs 100 im Detail beschrieben.

Dem Getriebe 200 ist eine Werkzeugaufnahme 140 zugeordnet, die beispielhaft ein Bohrfutter 145 aufweist. Diese Werkzeugaufnahme 140 dient zur Aufnahme eines Werkzeugs 150 und kann an die von dem Antriebsmotor 180 über das Getriebe 200 antreibbare Antriebswelle 120 angeformt sein oder aufsatzförmig mit dieser verbunden sein.

Fig. 2 zeigt den Ausschnitt 210 des handgeführten Elektrowerkzeugs 100 von Fig. 1. Dieser verdeutlicht eine beispielhafte Ausgestaltung des Getriebes 200, das illustrativ als Planetengetriebe ausgebildet ist und in Fig. 2 in einem ersten Schaltzustand gezeigt ist, mit dem der erste Gang des Elektrowerkzeugs 100 von Fig. 1 implementiert wird.

Das Planetengetriebe 200 weist illustrativ drei in einem von dem Getriebegehäuse 205 ausgebildeten Gehäuseinneren 255 angeordnete Gang- bzw. Planetenstufen auf: eine erste, hintere Stufe 272, eine zweite, mittlere Stufe 271 und eine dritte, vordere Stufe 270. Die vordere Planetenstufe 270 hat beispielhaft ein Sonnenrad 203, mindestens ein Planetenrad 207, einen mit einer nicht näher dargestellten Drehmitnahmekontur 267 versehenen Planetenträger 204, sowie ein mit einer radialen Verriegelungsgeometrie 294 versehenes Hohlrad 206. Der Planetenträger 204 ist z. B. über die nicht näher dargestellte Drehmitnahmekontur 267 mit der Antriebsspindel 120 verbunden, um diese im Betrieb des Elektrowerkzeugs 100 von Fig. 1 drehend anzutreiben. Die mittlere Planetenstufe 271 hat beispielhaft ein Sonnenrad 213, mindestens ein Planetenrad 217, einen Planetenträger 214, sowie ein mit einer radialen Verriegelungsgeometrie 296 versehenes Hohlrad 216. Der Planetenträger 214 bildet das Sonnenrad 203 der vorderen Planetenstufe 270 aus, wobei das Sonnenrad 203 am Planetenträger 214 auf geeignete Art und Weise befestigt sein kann oder an diesen angeformt bzw. einstückig mit diesem ausgebildet sein kann. Die hintere Planetenstufe 272 hat beispielhaft ein Sonnenrad 223, das drehfest mit einer zugeordneten Motorwelle verbunden ist, mindestens ein Planetenrad 227, einen mit einer radialen Verriegelungsgeometrie 298 versehenen Planetenträger 224, sowie ein axial und radial unbeweglich im Gehäuseinneren 205 angeordnetes Hohlrad 226. Der Planetenträger 224 bildet das Sonnenrad 213 der mittleren Planetenstufe 271 aus, wobei das Sonnenrad 213 am Planetenträger 224 auf geeignete Art und Weise befestigt sein kann oder an diesen angeformt bzw. einstückig mit diesem ausgebildet sein kann.

Gemäß einer Ausführungsform ist das Planetengetriebe 200 als Untersetzungsgetriebe ausgebildet, das mit einer Schaltvorrichtung 280 über den Zwischengang zwischen dem ersten Gang und dem zweiten Gang umschaltbar ist. Hierbei ist die betätigbare Schaltvorrichtung 280 dazu ausgebildet, durch sequentielle Deaktivierung der vorderen und mittleren Planetenstufen 270, 271 das Planetengetriebe 200 vom ersten in den zweiten Gang umzuschalten und durch sequentielle Aktivierung der mittleren und vorderen Planetenstufen 271, 270 vom zweiten in den ersten Gang umzuschalten. Alternativ hierzu kann das Planetengetriebe 200 z. B. derart ausgebildet sein, dass das Planetengetriebe 200 durch sequentielle Deaktivierung der hinteren und mittleren Planetenstufen 272, 271 vom ersten in den zweiten Gang umschaltbar ist und durch sequentielle Aktivierung der mittleren und hinteren Planetenstufen 271, 272 vom zweiten in den ersten Gang umschaltbar ist.

Die Schaltvorrichtung 280 weist illustrativ ein Schaltglied 285, eine Riegelscheibe 282, ein erstes Riegelrad 288, ein zweites Riegelrad 286 und ein zugeordnetes Federelement 284 auf. Das Schaltglied 285 ist beispielhaft axial beweglich in einer Öffnung 283 des Getriebegehäuses 205 angeordnet und z. B. mit dem Betätigungselement 230 von Fig. 1 verbunden, das beispielsweise als Schieber ausgebildet sein kann. Die Riegelscheibe 282 hat beispielhaft eine radiale Verriegelungsgeometrie 292 und ist axial unbeweglich und drehfest, d. h. radial unbeweglich, im Getriebegehäuse 205 befestigt. Das erste und zweite Riegelrad 288, 286 sind axial und radial beweglich im Getriebegehäuse 205 angeordnet und über eine formschlüssige, axiale Verbindung 287 aneinander fixierbar, z. B. über eine geeignete Zahn-Zahnlücken-Verbindung. Das Federelement 284 dient illustrativ zur Beaufschlagung des ersten und zweiten Riegelrads 288, 286 in axialer Richtung des Getriebegehäuses 205 bzw. des Planetengetriebes 200 gegeneinander.

Gemäß einer Ausführungsform weist das erste Riegelrad 288 eine radiale Verriegelungsgegengeometrie 278 auf, die mit der Verriegelungsgeometrie 296 des Hohlrads 216 der mittleren Planetenstufe 271 verriegelt ist. Das zweite Riegelrad 286 weist eine radiale Verriegelungsgegengeometrie 276 auf, die mit der Verriegelungsgeometrie 294 des Hohlrads 206 der vorderen Planetenstufe 270 verriegelt ist. Darüber hinaus kann das erste Riegelrad 288 an das Hohlrad 216 und das zweite Riegelrad 286 an das Hohlrad 206 angeformt bzw. einstückig mit diesem ausgebildet sein.

Im Betrieb des Elektrowerkzeugs 100 von Fig. 1 im ersten Gang wird das zweite Riegelrad 286 von dem Schaltglied 285 in einer ersten - in Fig. 2 axial vorderen - Betriebsposition axial unbeweglich gehalten, sodass dessen mit der Verriegelungsgeometrie 294 des Hohlrads 206 verriegelte Verriegelungsgegengeometrie 276 ebenfalls mit der Verriegelungsgeometrie 292 der Riegelscheibe 282 verriegelt ist. Illustrativ liegt das Schaltglied 285 gegen einen am Außenumfang des zweiten Riegelrads 286 vorgesehenen, ringförmigen Vorsprung 266 an. Somit wird das zweite Riegelrad 286 von der am Getriebegehäuse 205 befestigten Riegelscheibe 282 in seiner ersten, dem ersten Gang zugeordneten Betriebsposition drehfest im Getriebegehäuse 205 fixiert und blockiert somit ebenfalls das Hohlrad 206 drehfest im Getriebegehäuse 205.

Das erste Riegelrad 288 wird von dem Federelement 284 über die formschlüssige Verbindung 287 an dem zweiten Riegelrad 286 in einer ersten - in Fig. 2 ebenfalls axial vorderen - Betriebsposition gehalten, sodass das Schaltglied 285 zwischen dem ringförmigen Vorsprung 266 des zweiten Riegelrads 286 und einem am Außenumfang des ersten Riegelrads 288 vorgesehenen, ringförmigen Vorsprung 268 angeordnet ist. Somit ist das zweite Riegelrad 286 im ersten Gang des Elektrowerkzeugs 100 von Fig. 1 ebenfalls drehfest im Getriebegehäuse 205 angeordnet und fixiert über seine mit der Verriegelungsgeometrie 296 des Hohlrads 216 verriegelte Verriegelungsgegengeometrie 278 das Hohlrad 216 drehfest im Getriebegehäuse 205.

Da die Hohlräder 206, 216 der vorderen und mittleren Planetenstufen 270, 271 im ersten Gang des Elektrowerkzeugs 100 von Fig. 1 durch die Riegelräder 286 bzw. 288 drehfest im Getriebegehäuse 205 gehalten werden, sind die vordere und mittlere Planetenstufe 270 bzw. 271 somit im ersten Gang aktiviert. Dementsprechend ist im ersten Gang die größte mit dem Planetengetriebe 200 erreichbare Untersetzung wirksam, die sich aus einer der mittleren Planetenstufe 271 zugeordneten ersten Teiluntersetzung und einer der vorderen Planetenstufe 270 zugeordneten zweiten Teiluntersetzung zusammensetzt.

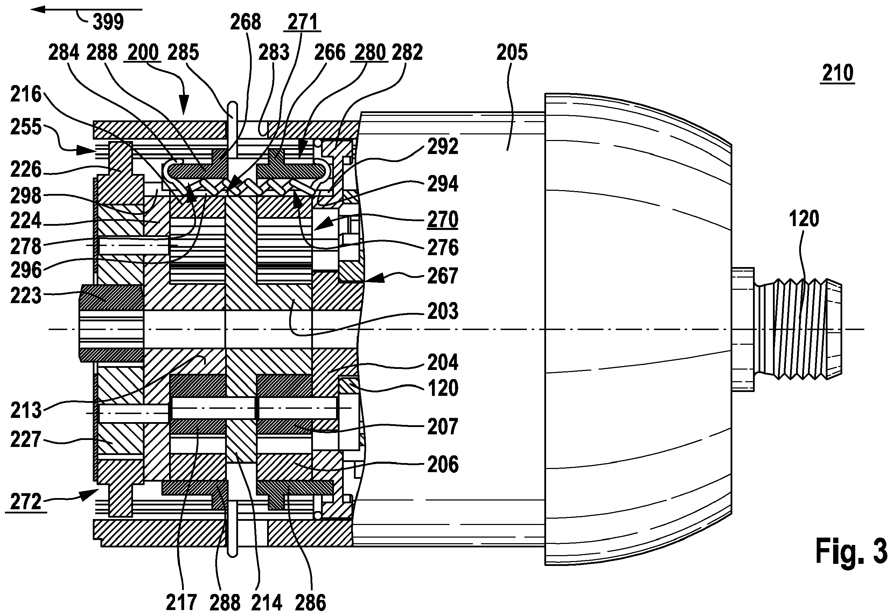

Fig. 3 zeigt den Ausschnitt 210 des handgeführten Elektrowerkzeugs 100 von Fig. 1 bei einer beispielhaften Umschaltung des Planetengetriebes 200 vom ersten in den zweiten Gang. Hierbei wird ein zweiter Schaltzustand realisiert, der den Zwischengang des Planetengetriebes 200 darstellt.

Gemäß einer Ausführungsform wird das Schaltglied 285 zur Umschaltung vom ersten in den zweiten Gang von seiner in Fig. 2 gezeigten Position axial in Richtung eines Pfeils 399 in der Öffnung 283 in die in Fig. 3 gezeigte Position verschoben. Bei der Verschiebung nimmt das gegen den ringförmigen Vorsprung 268 anliegende Schaltglied 285 das erste Riegelrad 288 mit und verschiebt dieses von seiner ersten Betriebsposition axial in Richtung des Pfeils 399 in eine zweite Betriebsposition. Hierbei wird die in Fig. 2 gezeigte, formschlüssige Verbindung 287 zwischen dem ersten und zweiten Riegelrad 288, 286 gelöst, sodass dass erste Riegelrad 288 anschließend drehbeweglich im Getriebegehäuse 205 angeordnet ist. Darüber hinaus wird die mit der Verriegelungsgeometrie 296 des Hohlrads 216 verriegelte Verriegelungsgegengeometrie 278 des ersten Riegelrads 288 mit der Verriegelungsgeometrie 298 des Planetenträgers 224 verriegelt, sodass das erste Riegelrad 288 drehfest mit dem Planetenträger 224 verbunden wird. Somit deaktiviert das erste Riegelrad 288 im zweiten Schaltzustand des Planetengetriebes 200 durch seine drehfeste Verbindung mit dem Hohlrad 216 und dem Planetenträger 224 die mittlere Planetenstufe 271, während das zweite Riegelrad 286 wie bei Fig. 2 beschrieben in seiner ersten Betriebsposition zur Aktivierung der vorderen Planetenstufe 270 angeordnet ist. Dementsprechend ist die der vorderen Planetenstufe 270 zugeordnete zweite Teiluntersetzung wirksam, während die der mittleren Planetenstufe 271 zugeordnete erste Teiluntersetzung im zweiten Schaltzustand unwirksam ist.

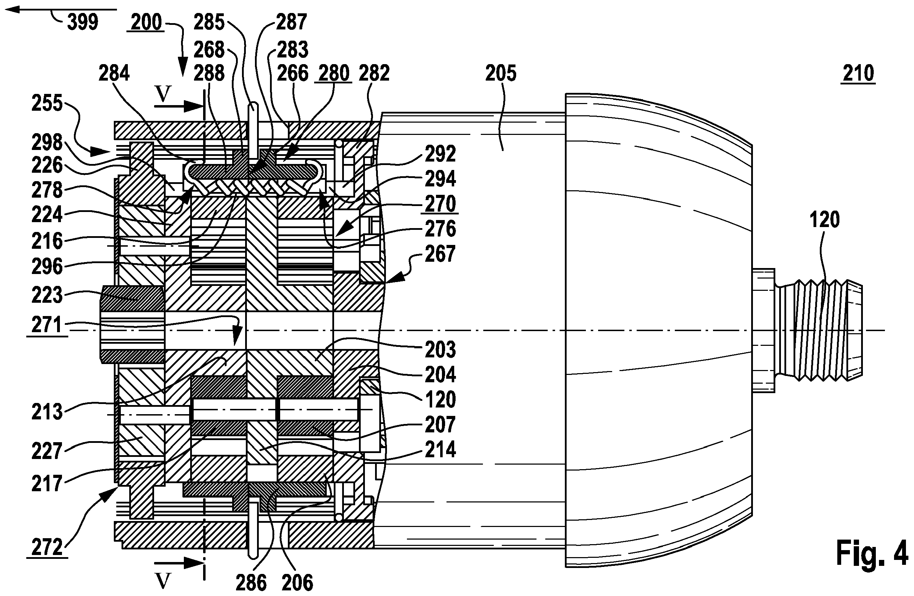

Gemäß einer Ausführungsform wird beim Verschieben des Schaltglieds 285 und somit des ersten Riegelrads 288 in Richtung des Pfeils 399 das Federelement 284 gespannt. Dieses beaufschlagt nun das zweite Riegelrad 286 in Richtung des Pfeils 399, um dieses nachfolgend durch eine vom Federelement 284 bereitgestellte Federkraft von seiner ersten Betriebsposition in Richtung des Pfeils 399 in eine zweite Betriebsposition zu verschieben, wie unten stehend bei Fig. 4 beschrieben. Folglich wird das Planetengetriebe 200 automatisch vom Zwischengang in den zweiten Gang umgeschaltet. Somit ist der Zwischengang ausschließlich beim Umschalten vom ersten in den zweiten Gang und umgekehrt jeweils kurzzeitig aktivierbar, sodass das Elektrowerkzeug 100 von Fig. 1 nicht dauerhaft in diesem Zwischengang betreibbar ist.

Fig. 4 zeigt den Ausschnitt 210 des handgeführten Elektrowerkzeugs 100 von Fig. 1 in einem dritten Schaltzustand, der den zweiten Gang implementiert. Wie aus Fig. 4 ersichtlich ist das zweite Riegelrad 286 ausgehend von dem in Fig. 3 gezeigten, zweiten Schaltzustand durch die vom Federelement 284 bereitgestellte Federkraft von seiner ersten Betriebsposition in Richtung des Pfeils 399 in eine zweite Betriebsposition verschoben worden und ist dort im dritten Schaltzustand erneut über die formschlüssige Verbindung 287 drehfest mit dem ersten Riegelrad 288 verbunden.

Sowohl das erste, als auch das zweite Riegelrad 288 bzw. 286 sind somit im dritten Schaltzustand des Planetengetriebes 200 drehbeweglich im Getriebegehäuse 205 angeordnet, wobei das erste Riegelrad 288 durch seine drehfeste Verbindung mit dem Hohlrad 216 und dem Planetenträger 224 die mittlere Planetenstufe 271 deaktiviert und das zweite Riegelrad 286 durch seine drehfeste Verbindung mit dem ersten Riegelrad 288 und dem Hohlrad 206 die vordere Planetenstufe 270 deaktiviert. Dementsprechend ist im dritten Schaltzustand weder die der mittleren Planetenstufe 271 zugeordnete erste Teiluntersetzung, noch die der vorderen Planetenstufe 270 zugeordnete zweite Teiluntersetzung wirksam, sodass das Drehmoment des Planetenträgers 224 der hinteren Planetenstufe 272 mittelbar auf den Planetenträger 204 der vorderen Planetenstufe 270 übertragen wird und hierdurch der zweite Gang realisiert wird.

Zur Umschaltung des Planetengetriebes 200 vom zweiten in den ersten Gang wird das Schaltglied 285 von seiner in Fig. 3 und 4 gezeigten Position in der Öffnung 283 axial in einer zur Richtung des Pfeils 399 entgegengesetzten Richtung zurück in die in Fig. 2 gezeigte Position verschoben. Hierbei nimmt das gegen den ringförmigen Vorsprung 266 anliegende Schaltglied 285 das zweite Riegelrad 286 mit und verschiebt dieses somit axial von seiner zweiten Betriebsposition in seine in Fig. 3 gezeigte erste Betriebsposition zurück, sodass erneut der in Fig. 3 gezeigte zweite Schaltzustand realisiert wird, der den Zwischengang implementiert. Anschießend wird das erste Riegelrad 288 durch die von dem Federelement 284 bereitgestellte Federkraft von seiner in Fig. 3 und 4 gezeigten zweiten Betriebsposition in seine in Fig. 2 gezeigte erste Betriebsposition zurück verschoben, sodass die Umschaltung in den in Fig. 2 gezeigten ersten Schaltzustand, der den ersten Gang implementiert, automatisch abgeschlossen wird.

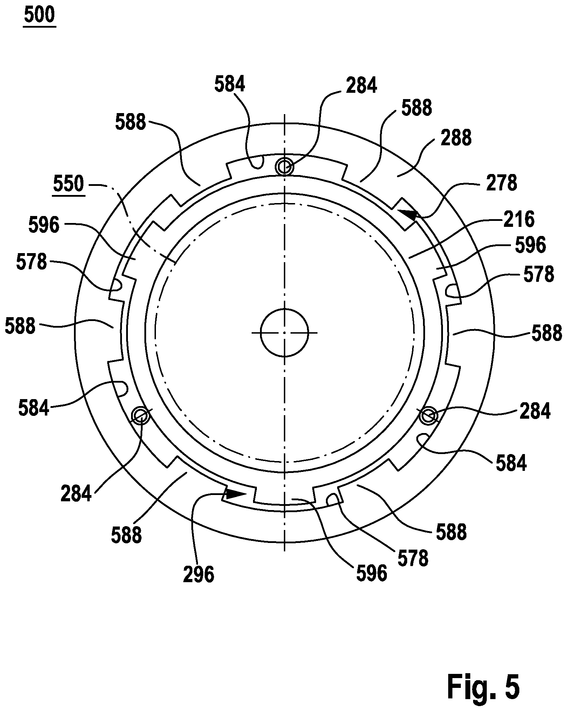

Fig. 5 zeigt eine Schnittansicht 500 mit dem ersten Riegelrad 288 von Fig. 4, das über seine Verriegelungsgegengeometrie 278 mit der Verriegelungsgeometrie 296 des Hohlrads 216 von Fig. 4 verriegelt ist. Hierbei wurden z. B. das Planetenrad 217 und das Sonnenrad 213 der mittleren Planetenstufe 271 von Fig. 4 zwecks Einfachheit und Übersichtlichkeit der Darstellung nur schematisch durch einen strichpunktierten Kreis illustriert, der mit 550 gekennzeichnet ist.

Gemäß einer Ausführungsform weist die Verriegelungsgeometrie 296 des Hohlrads 216 mindestens einen, an dessen Außenumfang vorgesehenen, radial auswärts gerichteten Außenzahn 596 auf, der z. B. in axialer Richtung des Hohlrads 216 stegförmig ausgebildet ist. Illustrativ sind drei Außenzähne 596 vorgesehen. Die Verriegelungsgegengeometrie 278 des ersten Riegelrads 288 weist mindestens zwei, an dessen Innenumfang vorgesehene, radial einwärts gerichtete Innenzähne 588 auf, die beispielhaft in axialer Richtung des Riegelrads 288 stegförmig ausgebildet sind. Illustrativ sind sechs Innenzähne 588 vorgesehen. Die Innenzähne 588 bilden mindestens eine nutartige Aussparung 584 zur Aufnahme des Federelements 284 von Fig. 2 bis 4 aus. Illustrativ bilden die Innenzähne 588 drei Aussparungen 584 aus, in denen drei Federelemente 284 angeordnet sind. Darüber hinaus bilden die Innenzähne 588 mindestens eine nutartige Aussparung 578 zur Aufnahme des mindestens einen Außenzahns 596 auf, um somit eine Verriegelung der Verriegelungsgegengeometrie 278 des ersten Riegelrads 288 mit der Verriegelungsgeometrie 296 des Hohlrads 216 zu ermöglichen. Illustrativ bilden die Innenzähne 588 drei Aussparungen 578 aus, in die die drei Außenzähne 596 eingreifen.

Es wird darauf hingewiesen, dass die Darstellung der beispielhaften Verriegelungsgeometrie 296 und der beispielhaften Verriegelungsgegengeometrie 278 als repräsentativ für alle bei Fig. 2 bis 4 beschriebenen Verriegelungsgeometrien und Verriegelungsgegengeometrien zu verstehen ist. Diese können somit zumindest ähnlich ausgebildet sein.

## Patentansprüche

1. Getriebe (200) für ein handgeführtes Elektrowerkzeug (100), das über eine betätigbare Schaltvorrichtung (280) mindestens zwischen einem ersten Gang mit hohem Drehmoment und einem zweiten Gang mit niedrigem Drehmoment umschaltbar ist, **dadurch gekennzeichnet, dass** zur Gangumschaltung mindestens ein Zwischengang vorgesehen ist, in dem das handgeführte Elektrowerkzeug (100) nicht dauerhaft betreibbar ist, wobei die betätigbare Schaltvorrichtung (280) dazu ausgebildet ist, eine Gangumschaltung zwischen dem ersten und zweiten Gang über den mindestens einen Zwischengang zu ermöglichen.

2. Handgeführtes Elektrowerkzeug (100) mit einem in einem Getriebegehäuse (205) angeordneten Getriebe (200) nach Anspruch 1.

3. Elektrowerkzeug nach Anspruch 2, **dadurch gekennzeichnet, dass** das Getriebe (200) als Planetengetriebe mit mindestens einer ersten, einer zweiten und einer dritten Planetenstufe (270, 271, 272) ausgebildet ist.

4. Elektrowerkzeug nach Anspruch 3, **dadurch gekennzeichnet, dass** die betätigbare Schaltvorrichtung (280) dazu ausgebildet ist, das Planetengetriebe (200) durch sequentielle Deaktivierung von mindestens zwei Planetenstufen (271, 270) vom ersten in den zweiten Gang umzuschalten.

5. Elektrowerkzeug nach Anspruch 3 oder 4, **dadurch gekennzeichnet, dass** die betätigbare Schaltvorrichtung (280) dazu ausgebildet ist, das Planetengetriebe (200) durch sequentielle Aktivierung von mindestens zwei Planetenstufen (271, 270) vom zweiten in den ersten Gang umzuschalten.

6. Elektrowerkzeug nach einem der Ansprüche 3 bis 5, **dadurch gekennzeichnet, dass** die betätigbare Schaltvorrichtung (280) zur Aktivierung und Deaktivierung der zweiten und dritten Planetenstufe (271, 270) mindestens ein erstes und ein zweites Riegelrad (288, 286) aufweist, die über ein zugeordnetes Federelement (284) in axialer Richtung des Planetengetriebes (200) gegeneinander beaufschlagt sind.

7. Elektrowerkzeug nach Anspruch 6, **dadurch gekennzeichnet, dass** die betätigbare Schaltvorrichtung (280) ein Schaltglied (285) aufweist, das dazu ausgebildet ist, eine Verschiebung des ersten oder zweiten Riegelrads (288, 286) relativ zum zweiten oder ersten Riegelrad (286, 288) in axialer Richtung des Planetengetriebes (200) gegen eine vom Federelement (284) bereitgestellte Federkraft zu ermöglichen.

8. Elektrowerkzeug nach Anspruch 6 oder 7, **dadurch gekennzeichnet, dass** das erste Riegelrad (288) in axialer Richtung des Planetengetriebes (200) von einer ersten in eine zweite Betriebsposition verschiebbar ist, wobei das erste Riegelrad (288) in seiner ersten Betriebsposition, die dem ersten Gang zugeordnet ist, drehfest mit einem der zweiten Planetenstufe (271) zugeordneten Hohlrad (216) sowie mittelbar mit dem Getriebegehäuse (205) verbunden ist, und in seiner zweiten Betriebsposition, die dem Zwischengang und dem zweiten Gang zugeordnet ist, drehfest mit einem der ersten Planetenstufe (272) zugeordneten Planetenträger (224) und dem Hohlrad (216) der zweiten Planetenstufe (271) verbunden ist.

9. Elektrowerkzeug nach einem der Ansprüche 6 bis 8, **dadurch gekennzeichnet, dass** das zweite Riegelrad (286) in axialer Richtung des Planetengetriebes (200) von einer ersten in eine zweite Betriebsposition verschiebbar ist, wobei das zweite Riegelrad (286) in seiner ersten Betriebsposition, die dem ersten Gang und dem Zwischengang zugeordnet ist, drehfest mit einem der dritten Planetenstufe (270) zugeordneten Hohlrad (206) und dem Getriebegehäuse (205) verbunden ist, und in seiner zweiten Betriebsposition, die dem zweiten Gang zugeordnet ist, drehfest mit dem Hohlrad (206) der dritten Planetenstufe (270) verbunden ist.

10. Elektrowerkzeug nach Anspruch 9, **dadurch gekennzeichnet, dass** das zweite Riegelrad (286) in seiner zweiten Betriebsposition drehfest mit einer Riegelscheibe (282) verbunden ist, die drehfest und axial unbeweglich im Getriebegehäuse (205) befestigt ist.

11. Elektrowerkzeug nach einem der Ansprüche 6 bis 10, **dadurch gekennzeichnet, dass** das erste und zweite Riegelrad (288, 286) im ersten und zweiten Gang des Planetengetriebes (200) in einer formschlüssigen Verbindung (287) aneinander befestigt sind, die durch eine vom Federelement (284) bereitgestellte Federkraft fixiert ist.

12. Elektrowerkzeug nach einem der Ansprüche 6 bis 11, **dadurch gekennzeichnet, dass** das erste und zweite Riegelrad (288, 286) im Zwischengang des Planetengetriebes (200) gegen eine vom Federelement (284) bereitgestellte Federkraft in axialer Richtung des Planetengetriebes (200) voneinander beabstandet sind.

13. Elektrowerkzeug nach einem der Ansprüche 6 bis 12, **dadurch gekennzeichnet, dass** das erste und zweite Riegelrad (288, 286) im ersten Gang des Planetengetriebes (200) drehfest im Getriebegehäuse (205) angeordnet sind.

14. Elektrowerkzeug nach einem der Ansprüche 6 bis 13, **dadurch gekennzeichnet, dass** das erste und zweite Riegelrad (288, 286) im zweiten Gang des Planetengetriebes (200) drehbeweglich im Getriebegehäuse (205) angeordnet sind.

15. Elektrowerkzeug nach einem der Ansprüche 6 bis 14, **dadurch gekennzeichnet, dass** das erste Riegelrad (288) im Zwischengang des Planetengetriebes (200) drehbeweglich im Getriebegehäuse (205) angeordnet ist und das zweite Riegelrad (286) im Zwischengang des Planetengetriebes (200) drehfest im Getriebegehäuse (205) angeordnet ist.

## Claims

1. Transmission (200) for a portable electric power tool (100), which is shiftable at least between a first gear with a high torque and a second gear with a low torque via an actuable shift device (280), **characterized in that**, for gear shifting, at least one intermediate gear is provided, in which the portable electric power tool (100) is not permanently operable, wherein the actuable shift device (280) is configured to allow gear shifting between the first and second gear via the at least one intermediate gear.

2. Portable electric power tool (100) having a transmission (200) according to Claim 1 arranged in a transmission housing (205).

3. Electric power tool according to Claim 2, **characterized in that** the transmission (200) is in the form of a planetary transmission having at least one first, one second and one third planetary stage (270, 271, 272).

4. Electric power tool according to Claim 3, **characterized in that** the actuable shift device (280) is configured to shift the planetary transmission (200) from the first gear into the second by sequential deactivation of at least two planetary stages (271, 270).

5. Electric power tool according to Claim 3 or 4, **characterized in that** the actuable shift device (280) is configured to shift the planetary transmission (200) from the second gear into the first by sequential activation of at least two planetary stages (271, 270).

6. Electric power tool according to one of Claims 3 to 5, **characterized in that**, for activating and deactivating the second and third planetary stage (271, 270), the actuable shift device (280) has at least one first and one second lock wheel (288, 286), which are urged towards one another in the axial direction of the planetary transmission (200) via an associated spring element (284) .

7. Electric power tool according to Claim 6, **characterized in that** the actuable shift device (280) has a shift element (285) that is configured to allow the first or second lock wheel (288, 286) to move relative to the second or first lock wheel (286, 288) in the axial direction of the planetary transmission (200) counter to a spring force provided by the spring element (284).

8. Electric power tool according to Claim 6 or 7, **characterized in that** the first lock wheel (288) is movable in the axial direction of the planetary transmission (200) from a first operating position into a second operating position, wherein the first lock wheel (288), in its first operating position, which is assigned to the first gear, is connected for conjoint rotation to a ring gear (216), assigned to the second planetary stage (271), and indirectly to the transmission housing (205), and, in its second operating position, which is assigned to the intermediate gear and the second gear, is connected for conjoint rotation to a planetary carrier (224), assigned to the first planetary stage (272), and the ring gear (216) of the second planetary stage (271).

9. Electric power tool according to one of Claims 6 to 8, **characterized in that** the second lock wheel (286) is movable in the axial direction of the planetary transmission (200) from a first operating position into a second operating position, wherein the second lock wheel (286), in its first operating position, which is assigned to the first gear and the intermediate gear, is connected for conjoint rotation to a ring gear (206), assigned to the third planetary stage (270), and the transmission housing (205), and, in its second operating position, which is assigned to the second gear, is connected for conjoint rotation to the ring gear (206) of the third planetary stage (270).

10. Electric power tool according to Claim 9, **characterized in that** the second lock gear (286), in its second operating position, is connected for conjoint rotation to a lock disc (282) which is fastened in a non-rotatable and axially immovable manner in the transmission housing (205).

11. Electric power tool according to one of Claims 6 to 10, **characterized in that**, in the first and second gears of the planetary transmission (200), the first and second lock wheels (288, 286) are fastened together in a form-fitting connection (287) which is fixed by a spring force provided by the spring element (284).

12. Electric power tool according to one of Claims 6 to 11, **characterized in that**, in the intermediate gear of the planetary transmission (200), the first and second lock wheels (288, 286) are spaced apart from one another in the axial direction of the planetary transmission (200) counter to a spring force provided by the spring element (284).

13. Electric power tool according to one of Claims 6 to 12, **characterized in that** the first and second lock wheels (288, 286) are arranged in a non-rotatable manner in the transmission housing (205) in the first gear of the planetary transmission (200).

14. Electric power tool according to one of Claims 6 to 13, **characterized in that** the first and second lock wheels (288, 286) are arranged in a rotatable manner in the transmission housing (205) in the second gear of the planetary transmission (200).

15. Electric power tool according to one of Claims 6 to 14, **characterized in that** the first lock wheel (288) is arranged in a rotatable manner in the transmission housing (205) in the intermediate gear of the planetary transmission (200), and the second lock wheel (286) is arranged in a non-rotatable manner in the transmission housing (205) in the intermediate gear of the planetary transmission (200).

## Revendications

1. Transmission (200) pour un outil électrique manuel (100), qui peut être commutée par le biais d'un dispositif de commutation commandable (280) au moins entre une première vitesse avec un couple élevé et une deuxième vitesse avec un faible couple, **caractérisée en ce que** pour le changement de vitesses, il est prévu au moins une vitesse intermédiaire dans laquelle l'outil électrique manuel (100) n'est pas entraîné de manière durable, le dispositif de commutation commandable (280) étant réalisé de manière à permettre un changement de vitesses entre la première et la deuxième vitesse par le biais de l'au moins une vitesse intermédiaire.

2. Outil électrique manuel (100) comprenant une transmission (200) selon la revendication 1 disposée dans un carter de transmission (205).

3. Outil électrique selon la revendication 2, **caractérisé en ce que** la transmission (200) est réalisée sous forme de transmission planétaire avec au moins un premier, un deuxième et un troisième étage planétaire (270, 271, 272).

4. Outil électrique selon la revendication 3, **caractérisé en ce que** le dispositif de commutation commandable (280) est réalisé de manière à commuter la transmission planétaire (200) par désactivation séquentielle d'au moins deux étages planétaires (271, 270) de la deuxième à la première vitesse.

5. Outil électrique selon la revendication 3 ou 4, **caractérisé en ce que** le dispositif de commutation commandable (280) est réalisé de manière à commuter la transmission planétaire (200) par activation séquentielle d'au moins deux étages planétaires (271, 270) de la deuxième à la première vitesse.

6. Outil électrique selon l'une quelconque des revendications 3 à 5, **caractérisé en ce que** le dispositif de commutation commandable (280) pour l'activation et la désactivation du deuxième et du troisième étage planétaire (271, 270) présente au moins un premier et un deuxième engrenage conique (288, 286) qui sont sollicités l'un contre l'autre par le biais d'un élément de ressort associé (284) dans la direction axiale de la transmission planétaire (200).

7. Outil électrique selon la revendication 6, **caractérisé en ce que** le dispositif de commutation commandable (280) présente un organe de commutation (285) qui est prévu pour permettre un déplacement du premier ou du deuxième engrenage conique (288, 286) par rapport au deuxième ou au premier engrenage conique (286, 288) dans la direction axiale de la transmission planétaire (200) à l'encontre d'une force de ressort fournie par l'élément de ressort (284).

8. Outil électrique selon la revendication 6 ou 7, **caractérisé en ce que** le premier engrenage conique (288) peut être déplacé dans la direction axiale de la transmission planétaire (200) d'une première à une deuxième position de fonctionnement, le premier engrenage conique (288), dans sa première position de fonctionnement, qui est associée à la première vitesse, étant connecté de manière solidaire en rotation à une couronne dentée (216) associée au deuxième étage planétaire (271) et de manière indirecte au boîtier de transmission (205), et dans sa deuxième position de fonctionnement, qui est associée à la vitesse intermédiaire et à la deuxième vitesse, étant connecté de manière solidaire en rotation à un porte-satellites (224) associé au premier étage planétaire (272) et à la couronne dentée (216) du deuxième étage planétaire (271).

9. Outil électrique selon l'une quelconque des revendications 6 à 8, **caractérisé en ce que** le deuxième engrenage conique (286) peut être déplacé dans la direction axiale de la transmission planétaire (200) d'une première à une deuxième position de fonctionnement, le deuxième engrenage conique (286), dans sa première position de fonctionnement, qui est associée à la première vitesse et à la vitesse intermédiaire, étant connecté de manière solidaire en rotation à une couronne dentée (206) associée au troisième étage planétaire (270) et au boîtier de transmission (205), et dans sa deuxième position de fonctionnement, qui est associée à la deuxième vitesse, étant connecté de manière solidaire en rotation à la couronne dentée (206) du troisième étage planétaire (270).

10. Outil électrique selon la revendication 9, **caractérisé en ce que** le deuxième engrenage conique (286), dans sa deuxième position de fonctionnement, est connecté de manière solidaire en rotation à un disque de verrouillage (282) qui est fixé de manière solidaire en rotation et non déplaçable axialement dans le boîtier de transmission (205).

11. Outil électrique selon l'une quelconque des revendications 6 à 10, **caractérisé en ce que** le premier et le deuxième engrenage conique (288, 286) dans la première et la deuxième vitesse de la transmission planétaire (200) sont fixés l'un à l'autre dans une liaison par engagement par correspondance de formes (287), qui est fixée par une force de ressort fournie par l'élément de ressort (284).

12. Outil électrique selon l'une quelconque des revendications 6 à 11, **caractérisé en ce que** le premier et le deuxième engrenage conique (288, 286) dans la vitesse intermédiaire de la transmission planétaire (200) sont espacés l'un de l'autre à l'encontre d'une force de ressort fournie par l'élément de ressort (284) dans la direction axiale de la transmission planétaire (200).

13. Outil électrique selon l'une quelconque des revendications 6 à 12, **caractérisé en ce que** le premier et le deuxième engrenage conique (288, 286) sont disposés dans la première vitesse de la transmission planétaire (200) de manière solidaire en rotation dans le boîtier de transmission (205).

14. Outil électrique selon l'une quelconque des revendications 6 à 13, **caractérisé en ce que** le premier et le deuxième engrenage conique (288, 286) sont disposés dans la deuxième vitesse de la transmission planétaire (200) de manière déplaçable en rotation dans le boitier de transmission (205).

15. Outil électrique selon l'une quelconque des revendications 6 à 14, **caractérisé en ce que** le premier engrenage conique (288) est disposé dans la vitesse intermédiaire de la transmission planétaire (200) de manière déplaçable en rotation dans le boîtier de transmission (205) et le deuxième engrenage conique (286) est disposé dans la vitesse intermédiaire de la transmission planétaire (200) de manière solidaire en rotation dans le boîtier de transmission (205).
